(19) **Europäisches Patentamt**
**European Patent Office**
**Office européen des brevets**

(11) **EP 2 639 434 B1**

(12) **EUROPEAN PATENT SPECIFICATION**

(45) Date of publication and mention
of the grant of the patent:
**08.11.2017 Bulletin 2017/45**

(51) Int Cl.:
*F02D 41/12* (2006.01)     *F02D 41/04* (2006.01)
*F02P 5/15* (2006.01)

(21) Application number: **12196416.7**

(22) Date of filing: **11.12.2012**

(54) **Acceleration shock reduction control device, and method and program product for controlling acceleration shock reduction**

Vorrichtung zur Steuerung der Beschleunigungsstoßreduktion, und Verfahren und Programmprodukt zur Steuerung der Beschleunigungsstoßreduktion

Dispositif de commande de réduction de choc d'accélération et procédé et produit de programme permettant de commander l'accélération de réduction de choc

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.12.2011 JP 2011289592**

(43) Date of publication of application:
**18.09.2013 Bulletin 2013/38**

(73) Proprietor: **SUZUKI MOTOR CORPORATION Hamamatsu-shi Shizuoka 432-8611 (JP)**

(72) Inventors:
• **Hamamura, Masahiro**
  **Hamamatsu-shi, Shizuoka 432-8611 (JP)**
• **Kawai, Kazunori**
  **Hamamatsu-shi, Shizuoka 432-8611 (JP)**

(74) Representative: **Viering, Jentschura & Partner mbB**
**Patent- und Rechtsanwälte**
**Kennedydamm 55 / Roßstrasse**
**40476 Düsseldorf (DE)**

(56) References cited:
**EP-A1- 1 953 370     EP-A2- 0 690 225**
**DE-A1- 4 334 571**

**Description**

CROSS-REFERENCE TO RELATED APPLICATIONS

This application is based upon and claims the benefit of priority of the prior Japanese Patent Application No. 2011-289592, filed on December 28, 2011, the entire contents of which are incorporated herein by reference.

BACKGROUND OF THE INVENTION

[Field of the Invention]

The present invention relates to an acceleration shock reduction control device, and a method and a program product for controlling acceleration shock reduction. The present invention is suitably used to reduce an acceleration shock occurring when a vehicle shifts from a deceleration state to an acceleration state.

[Description of the Related Art]

When a vehicle such as a motorcycle shifts from a deceleration state to an acceleration state, a driver sometimes receives an acceleration shock when slightly opening a throttle. The acceleration shock is ascribable to an allowance existing between power transmission members provided between a driving source and a driving wheel of the vehicle. Specifically, in the deceleration state, the aforesaid allowance exists on one side between the power transmission members, but when the vehicle shifts to the acceleration state, the allowance moves to the other side between the power transmission members, so that the power transmission members come into strong contact with each other.

In order to reduce such an acceleration shock, Patent Document 1, for example, discloses an acceleration shock reduction control device including a controlling unit which, upon determining a shift from a deceleration state to an acceleration state, adjusts an output by controlling ignition of an internal combustion engine. Concretely, when a deviation between a rotation speed of a crankshaft and a rotation speed of a counter shaft reaches a predetermined threshold value, it is determined that a predetermined waiting time has passed, and an ignition cut is instructed over a predetermined ignition cycles.

[Patent Document 1] Japanese Laid-open Patent Publication No. 2008-190332

However, the calculation of the deviation between the rotation speed of the crankshaft and the rotation speed of the counter shaft in the acceleration shock reduction control device of Patent Document 1 has a problem that no consideration is given to an acceleration shock ascribable to an allowance of power transmission members on subsequent stages of the counter shaft, such as, for example, a drive chain, a sprocket, and so on. Specifically, even though the acceleration shock due to the power transmission members on the subsequent stages of the counter shaft is large, the control to reduce the acceleration shock may not work if an acceleration shock due to power transmission members on preceding stages of the counter shaft is small.

Further, in the case where the ignition cut is instructed upon the determination that the predetermined waiting time has passed when the deviation between the rotation speed of the crankshaft and the rotation speed of the counter shaft reaches the predetermined threshold value, as in the acceleration shock reduction control device of Patent Document 1, there is a problem that an ignition cut timing is delayed. The delay in the ignition cut timing involves a risk that an inertia force of the crankshaft is generated and even the ignition cut cannot reduce the acceleration shock sufficiently. Document EP0690225 also discloses a similar acceleration shock control based on the variation in detected engine speed.

SUMMARY OF THE INVENTION

The present invention was made in consideration of the above-described problems and has an object to accurately determine a case where an acceleration shock occurs to sufficiently reduce the acceleration shock.

An acceleration shock reduction control device according to the present invention is an acceleration shock reduction control device which reduces an acceleration shock occurring when a vehicle shifts from a deceleration state to an acceleration state, the acceleration shock reduction control device including: means for detecting rotation information of an engine mounted on the vehicle; means for detecting rotation information of a driving wheel which rotates by an output transmitted from the engine; and means for performing control to reduce the acceleration shock based on deviation information between the rotation information detected by the means for detecting rotation information of the engine and the rotation information detected by the means for detecting rotation information of the driving wheel.

Further, an acceleration shock reduction control method according to the present invention is an acceleration shock reduction control method which reduces an acceleration shock occurring when a vehicle shifts from a deceleration state to an acceleration state, the method including: an engine rotation information detecting step of detecting rotation information of an engine mounted on the vehicle; a driving wheel rotation information detecting step of detecting rotation information of a driving wheel which rotates by an output transmitted from the engine; and a reduction controlling step of performing control to reduce the acceleration shock based on deviation information between the rotation information detected by the engine rotation information detecting step and the rotation information detected by the driving wheel rotation information detecting step.

A program product according to the present invention is a program product for controlling an acceleration shock reduction control device which reduces an acceleration shock occurring when a vehicle shifts from a deceleration state to an acceleration state, the program product causing a computer to execute: an engine rotation information detecting step of detecting rotation information of an engine mounted on the vehicle; a driving wheel rotation information detecting step of detecting rotation information of a driving wheel which rotates by an output transmitted from the engine; and a reduction controlling step of performing control to reduce the acceleration shock based on deviation information between the rotation information detected by the engine rotation information detecting step and the rotation information detected by the driving wheel rotation information detecting step.

BRIEF DESCRIPTION OF THE DRAWINGS

Fig. 1 is a view showing a whole structure of a motorcycle.
Fig. 2 is a schematic view showing a route where an output of an engine is transmitted to a rear wheel.
Fig. 3 is a diagram showing a structure of an acceleration shock reduction control device.
Fig. 4 is a chart showing a change of an engine rotation speed.
Fig. 5 is a chart showing a change of a rotation difference value.
Fig. 6 is a chart showing a change of an increase rate of the engine rotation speed.
Fig. 7 is a chart showing a change of a throttle opening degree.
Fig. 8 is a chart showing a map of threshold values of a throttle opening degree according to the engine rotation speed.
Fig. 9 is a chart showing a change of an ignition timing under reduction control.
Fig. 10 is a chart showing a hunting behavior of the engine rotation speed.
Fig. 11 is a flowchart showing an acceleration shock reduction control process.

DETAILED DESCRIPTION OF THE PREFERRED EMBODIMENTS

Hereinafter, an embodiment according to the present invention will be described with reference to the drawings. An acceleration shock reduction control device according to this embodiment is effectively applicable to various kinds of engines mounted on a vehicle such as a motorcycle. In this embodiment, a case where the acceleration shock reduction control device is applied to a motorcycle will be described.

First, a whole structure of a motorcycle 100 of this embodiment will be described.

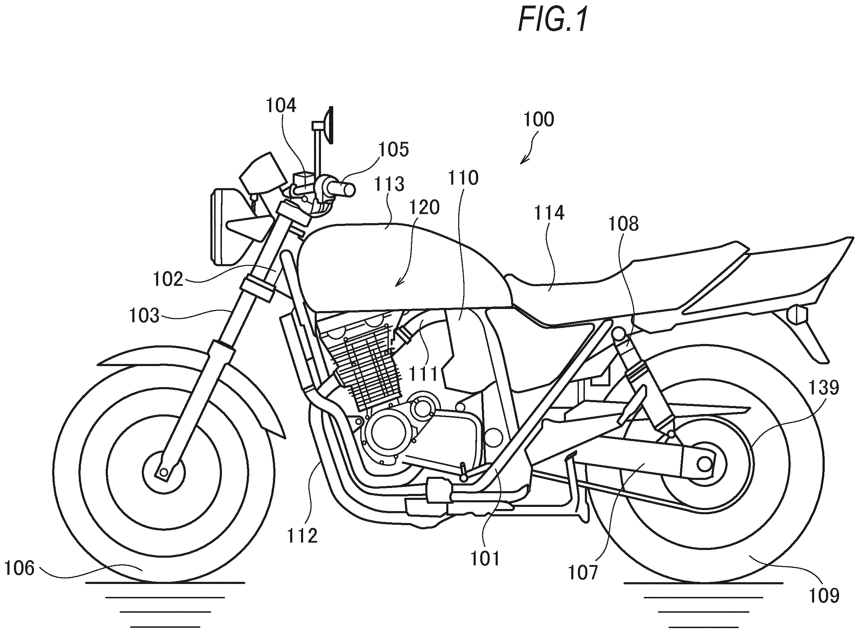

In Fig. 1, two front forks 103 supported by a steering head pipe 102 to be pivotable left and right are provided on a front portion of a body frame 101. A handlebar 104 is fixed to upper ends of the front forks 103, and grips 105 are provided on both ends of the handlebar 104. One of the grips 105 on the both ends is a throttle grip that a driver operates in order to open/close a later-described throttle valve 129. A front wheel 106 is rotatably supported on lower portions of the front forks 103.

A swing arm 107 is swingably provided on a rear portion of the body frame 101, and a rear shock absorber 108 is suspended between the body frame 101 and the swing arm 107. A rear wheel 109 as a driving wheel is rotatably supported on a rear end of the swing arm 107.

An air-fuel mixture is supplied to an engine 120 mounted on the body frame 101 via an intake pipe 111 coupled to an air cleaner 110, and exhaust gas resulting from combustion is discharged through an exhaust pipe 112. Further, a fuel tank 113 is mounted above the engine 120, and a seat 114 is provided at the back of the fuel tank 113.

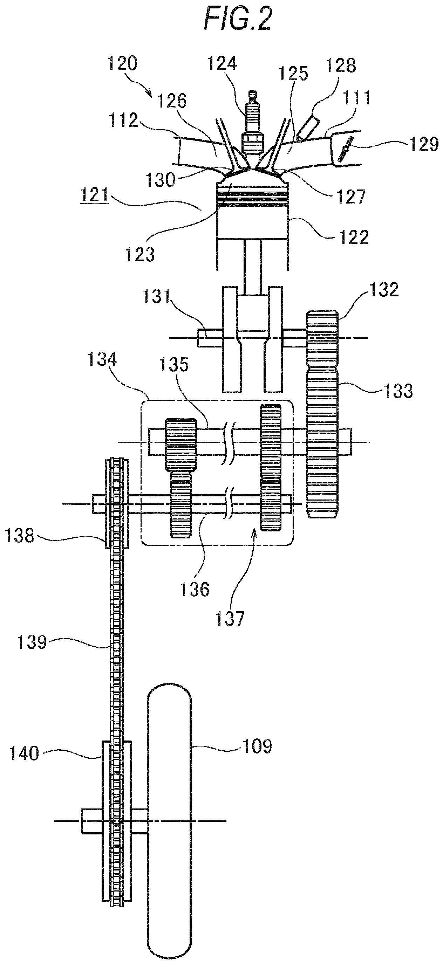

Fig. 2 is a schematic view showing a route where an output of the engine 120 is transmitted to the rear wheel 109.

A piston 122 is reciprocatably disposed in a cylinder assembly 121 included in the engine 120. A combustion chamber 123 is formed on a top portion of the piston 122, and an ignition plug 124 is fixed to the combustion chamber 123, with its tip directed to a center of the combustion chamber 123. Further, in the cylinder assembly 121, an intake port 125 and an exhaust port 126 which communicate with the combustion chamber 123 are formed.

The aforesaid intake pipe 111 is connected to the intake port 125. In the intake port 125, an intake valve 127 which opens/closes so as to allow the supply of the air-fuel mixture to the combustion chamber 123 is formed. Further, upstream of the intake port 125, an injector 128 which injects a fuel to intake air supplied from the intake pipe 111 is disposed. Further, in the middle of the intake pipe 111, the throttle valve 129 which opens/closes according to the operation of the aforesaid throttle grip is disposed. According to a throttle opening degree by which the throttle valve 129 is pivoted, an amount of the intake air supplied to the engine 120 through the intake pipe 111 increases/decreases.

The aforesaid exhaust pipe 112 is connected to the exhaust port 126. In the exhaust port 126, an exhaust valve 130 which opens/closes so as to allow the discharge of the exhaust gas from the combustion chamber 123 is disposed.

The air-fuel mixture supplied into the combustion chamber 123 is ignited by the ignition plug 124 to be burned, and then is discharged as the exhaust gas via the exhaust pipe 112. When the air-fuel mixture is burned, the piston 122 performs the reciprocating motion. The reciprocating motion of the piston 122 is converted to rotation of the crankshaft 131.

The rotation of the crankshaft 131 is input to a transmission 134 via a primary drive gear 132 and a primary drive gear 133. The transmission 134 includes a main shaft 135, a counter shaft 136, and a plurality of transmission gears 137. The rotation input from the main shaft 135 is converted with a necessary reduction ratio by the transmission gears 137 and thereafter is output from the counter shaft 136.

A drive sprocket 138 is pivotally fitted to the counter shaft 136. The drive sprocket 138 is connected to a driven sprocket 140 via a drive chain 139. The driven sprocket 140 is coupled to the rear wheel 109. Therefore, the rotation from the counter shaft 136 is transmitted to the rear wheel 109 via the drive sprocket 138, the drive chain 139, and the driven sprocket 140, so that the motorcycle 100 is driven.

In the motorcycle 100 thus structured, an acceleration shock occurring at the time of a shift from a deceleration state to an acceleration state occurs due to an allowance between the power transmission members provided between the engine 120 and the rear wheel 109. Here, the power transmission members include the aforesaid primary drive gear 132, primary driven gear 133, transmission 134, drive sprocket 138, drive chain 139, driven sprocket 140, and so on.

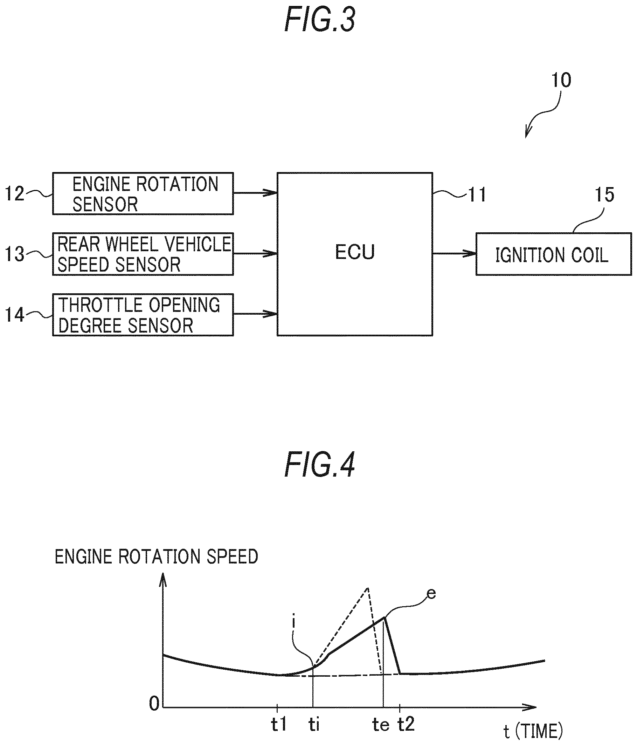

Next, a structure of the acceleration shock reduction control device 10 which performs control to reduce the acceleration shock (hereinafter, referred to as reduction control) will be described with reference to Fig. 3. Fig. 3 is a block diagram showing the structure of the acceleration shock reduction control device 10.

The acceleration shock reduction control device 10 includes an ECU 11, an engine rotation sensor 12, a rear wheel vehicle speed sensor 13, a throttle opening degree sensor 14, an ignition coil 15, and so on.

The ECU 11 is an electronic control unit which functions as a computer controlling various kinds of constituent devices and is disposed, for example, under the seat 114. The ECU 11 corresponds to an example of means for performing control to reduce the acceleration shock or the like. The ECU 11 includes a CPU, a memory, an input interface, an output interface, and so on. By the CPU executing a program stored in the memory, the ECU 11 determines whether or not the acceleration shock occurs, based on signals output from various kinds of sensors or the like, and when the acceleration shock occurs, performs the control to reduce the output of the engine 120. Further, in the ECU 11, threshold values used in determining whether or not the acceleration shock occurs, a map, and so on are stored in the memory.

The engine rotation sensor 12 detects a rotation speed of the crankshaft 131 as rotation information of the engine 120 and is disposed near the crankshaft 131. The engine rotation sensor 12 corresponds to an example of means for detecting rotation information of the engine. The engine rotation sensor 12 outputs the detected rotation speed of the crankshaft 131 to the ECU 11.

The rear wheel vehicle speed sensor 13 detects a rotation speed of the rear wheel 109 as rotation information of the driving wheel and is disposed near the rear wheel 109. The rear wheel vehicle speed sensor 13 corresponds to an example of means for detecting rotation information of the driving wheel. The rear wheel vehicle speed sensor 13 outputs the detected rotation speed of the rear wheel 109 to the ECU 11.

The throttle opening degree sensor 14 detects a throttle opening degree of the throttle valve 129 and is disposed near the throttle valve 129. The throttle valve opening degree sensor 14 corresponds to an example of means for detecting the throttle opening degree. The throttle opening degree sensor 14 outputs a signal corresponding to the throttle opening degree of the throttle valve 129 to the ECU 11.

The ignition coil 15 supplies a high-voltage current to the ignition plug 124 at a timing as instructed by the ECU 11. Therefore, in the combustion chamber 123 of the engine 120, the ignition plug 124 is ignited at the timing instructed by the ECU 11 and the combustion takes place.

As described above, the acceleration shock occurring when the motorcycle 100 shifts from the deceleration state to the acceleration state is ascribable to the allowance between the power transmission members provided between the engine 120 and the rear wheel 109. Therefore, in this embodiment, in order to accurately determine the acceleration shock, the occurrence of the acceleration shock is determined based on deviation information between the engine rotation speed detected by the engine rotation sensor 12 and the rear wheel rotation speed detected by the rear wheel vehicle speed sensor 13.

Incidentally, since, from the engine 120 up to the rear wheel 109, the speed is reduced by the power transmission members such as the transmission 134, it is not preferable to compare the engine rotation speed and the rear wheel rotation speed as they are. Therefore, the ECU 11 converts the rear wheel rotation speed detected by the rear wheel vehicle speed sensor 13 to an engine rotation speed by using an expression (1) and an expression (2). Hereinafter, the rotation speed being the engine rotation speed to which the rear wheel rotation speed is converted will be called a rear wheel vehicle speed-engine rotation speed.

$$\text{rear wheel vehicle speed-engine rotation speed}$$

$$= \text{rear wheel rotation speed/vehicle speed}$$

$$\text{calibration value} \times \text{calibrated engine rotation}$$

$$\text{speed} \ldots \text{expression (1)}$$

Note that the "rear wheel rotation speed" in the expression (1) is a moving average deviation of the rear wheel rotation speed detected by the rear wheel vehicle speed sensor 13, and an average value of the latest ten rear wheel rotation speeds, for example, is adopted.

Further, the "vehicle speed calibration value" can be calculated from the expression (2).

$$\text{vehicle speed calibration value} =$$

$$\frac{0.06 \times \pi \times \begin{array}{c}\text{calibrated engine} \\ \text{rotation speed}\end{array} \times \begin{array}{c}\text{number of teeth} \\ \text{of drive sprocket}\end{array} \times \begin{array}{c}\text{rear} \\ \text{wheel diameter}\end{array}}{\text{gear ratio} \times \text{number of teeth of driven sprocket}}$$

$$\ldots \text{expression (2)}$$

Fig. 4 is a chart showing a change of the engine rotation speed. The broken line represents the engine rotation speed when the acceleration shock occurs, without the reduction control being performed. The solid line represents the engine rotation speed when the acceleration shock is reduced, with the reduction control being performed. Further, the dashed line represents the rear wheel vehicle speed-engine rotation speed being the engine rotation speed to which the rear wheel rotation speed is converted. In Fig. 4, it is seen that the reduction control is performed from a time ti to a time te. Further, portions not illustrated, of the engine rotation speed represented by the broken line and the rear wheel vehicle speed-engine rotation speed represented by the dashed line overlap with the engine rotation speed represented by the solid line and the depiction thereof is omitted.

In Fig. 4, the deceleration state is before a time t1 and the acceleration state is after the time t1. Before the time t1, the engine rotation speed and the rear wheel vehicle speed-engine rotation speed present the same change. On the other hand, after the shift from the deceleration state to the acceleration state at the time t1, the engine rotation speed increases while the allowance between the power transmission members moves from one side to the other side. After the time ti, a gradient of the engine rotation speed represented by the solid line when the reduction control is performed is less than that of the engine rotation speed represented by the broken line when the reduction control is not performed. Thereafter, the allowance between the power transmission members completely moves from the one side to the other side, and from a time t2 when the power transmission members come into contact with each other again, the engine rotation speed and the rear wheel vehicle speed-engine rotation speed present the same change again. The larger the deviation between the engine rotation speed and the rear wheel vehicle speed-engine rotation speed is, the more distinctly the acceleration shock appears in the vehicle behavior when the power transmission members come into contact with each other again.

Therefore, in this embodiment, the ECU 11 performs the reduction control when the engine rotation speed changes as shown by the broken line in Fig. 4 and the acceleration shock occurs, thereby reducing the engine rotation speed as shown by the solid line in Fig. 4. Concretely, by using, as the deviation information, a rotation difference value equal to the engine rotation speed from which the rear wheel vehicle speed-engine rotation speed is subtracted, the ECU 11 performs the control to make the rotation difference value small.

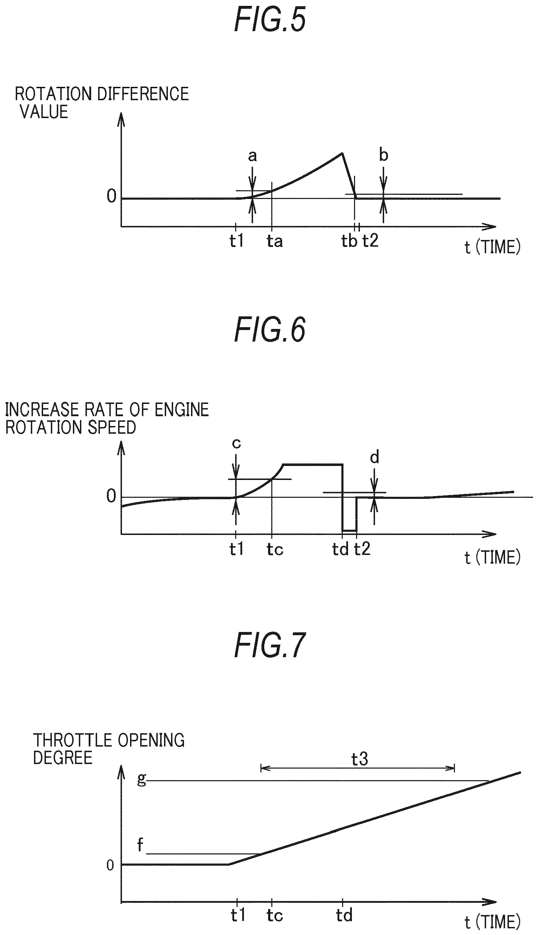

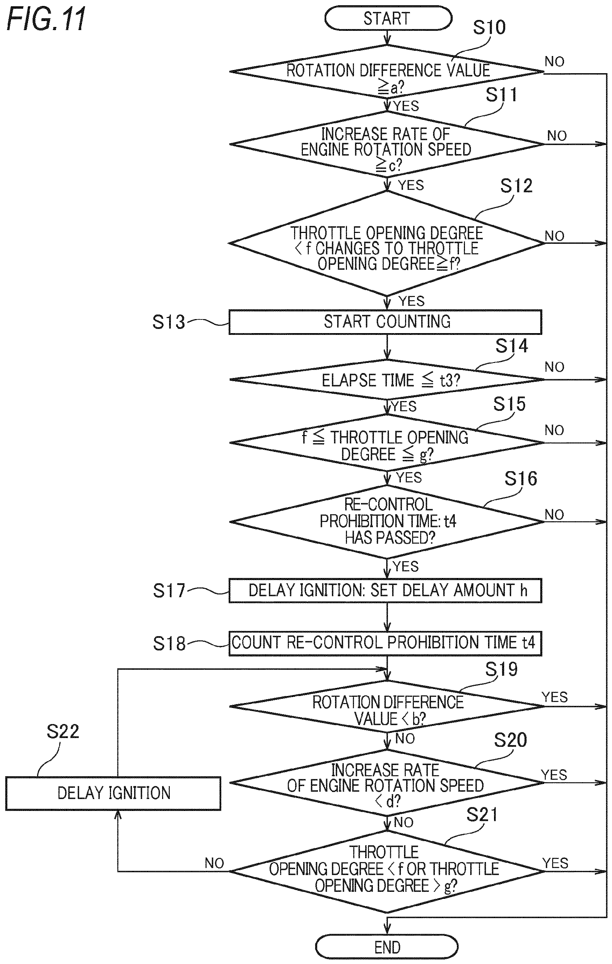

Hereinafter, the reduction control according to this embodiment will be concretely described with reference to the flowchart shown in Fig. 11 and the graphs shown in Fig. 5 to Fig. 10. Note that the flowchart shown in Fig. 11 is realized by the CPU of the ECU 11 executing the program stored in the memory, and is constantly executed by the CPU. The ECU 11 constantly obtains the engine rotation speed, the rear wheel rotation speed, and the throttle opening degree from the engine rotation sensor 12, the rear wheel vehicle speed sensor 13, and the throttle opening degree sensor 14, and stores them including those in a past predetermined time.

First, at Step S10, the ECU 11 calculates the rear wheel vehicle speed-engine rotation speed from the rear wheel rotation speed by using the aforesaid expressions (1) and (2). Next, the ECU 11 calculates the rotation difference value by subtracting the rear wheel vehicle speed-engine rotation speed from the engine rotation speed, and determines whether or not the calculated rotation difference value is equal to or more than a threshold value a (first deviation threshold value). When the rotation difference value is equal to or more than the threshold value a, the ECU 11 determines that there is a possibility that the acceleration shock occurs, to go to a process at Step S11. On the other hand, when the rotation difference value is less than the threshold value a, it ends the process.

Fig. 5 is a chart showing a change of the rotation difference value. The change of the rotation difference value shown in Fig. 5 is a result of the subtraction of the rear wheel vehicle speed-engine rotation speed represented by the dashed line from the engine rotation speed represented by the solid line shown in Fig. 4. As shown in Fig. 5, the rotation difference value gradually increases from the time t1 when the shift from the deceleration state to the acceleration state takes place, and it becomes equal to or more than the threshold value a at a time ta. At the time ta when the rotation difference value becomes equal to or more than the threshold value a, the ECU 11 goes to Step S11.

Next, at Step S11, the ECU 11 calculates an increase rate of the engine rotation speed, and determines whether or not the increase rate is equal to or more than a threshold value c (first change rate threshold value). The ECU 11 constantly calculates the increase rate of the engine rotation speed based on the engine rotation speed. When the increase rate is equal to or more than the threshold value c, the ECU 11 determines that there is a possibility that the acceleration shock occurs, to go to a process at Step S12. On the other hand, when the increase rate is less than the threshold value c, it ends the process. A reason why the increase rate of the engine rotation speed is used for the determination of the acceleration shock is that the engine rotation speed rapidly increases when the acceleration shock occurs.

Fig. 6 is a chart showing a change of the increase rate of the engine rotation speed. The change of the increase rate shown in Fig. 6 is an increase rate of the engine rotation speed represented by the solid line in Fig. 4. As shown in Fig. 6, the increase rate is a negative value in the deceleration state before the time t1, increases over 0 (zero) from the time t1, and becomes equal to or more than the threshold value c at a time tc. The ECU 11 goes to Step S12 at the time tc when the increase rate becomes equal to or more than the threshold value c. Incidentally, in the description here, the increase rate of the engine rotation speed is used, but a change rate of the engine rotation speed may be used.

A reason why not only the rotation difference value but also the increase rate of the engine rotation speed is used is to more accurately determine the acceleration shock. Specifically, due to an influence of the vibration of the engine 120, a running surface, and the like, the engine rotation speed is likely to fluctuate. When only one of the rotation difference value and the increase rate of the engine rotation speed is used, a mere vibration is determined as the occurrence of the acceleration shock by mistake and the reduction control is unnecessarily performed, which has an adverse effect on a behavior of the vehicle.

Further, in this embodiment, later-described Step S12 to Step S16 are added for the more accurate determination of the acceleration shock.

Further, the aforesaid threshold value a and threshold value c are preferably as small values as possible. The purpose is to monitor a slight behavior indicating the occurrence of the acceleration shock and when the acceleration shock occurs, to perform the reduction control at an early stage before the engine rotation speed becomes high. When the threshold value a and the threshold value c are large, the start timing of the reduction control is delayed, so that the engine rotation speed becomes high and an inertia force is generated, which makes it difficult to sufficiently reduce the acceleration shock.

Next, at Step S12, the ECU 11 determines whether or not the throttle opening degree changes from a throttle opening degree less than a predetermined throttle opening degree f to become equal to or more than the predetermined opening degree f. When this condition is satisfied, the ECU 11 goes to a process at Step S13, and when the condition is not satisfied, it ends the process.

Fig. 7 is a chart showing a change of the throttle opening degree. As shown in Fig. 7, the throttle opening degree is 0 (zero) in the deceleration state before the time t1 and gradually increases from the vicinity of the time t1. In Fig. 7, the predetermined throttle opening degree f being a lower limit at which the acceleration shock occurs and a later-described throttle opening degree g being an upper limit at which the acceleration shock occurs are shown.

Here, at the time tc when the increase rate is determined as being equal to or more than the threshold value c at Step S11, the throttle opening degree has already changed from the throttle opening degree less than the predetermined throttle opening degree f to become equal to or more than the predetermined opening degree f, and therefore, the ECU 11 goes to a process at Step S13.

Note that the predetermined throttle opening degree f and the predetermined throttle opening degree g are set according to the engine rotation speed, taking a change of running resistance into consideration.

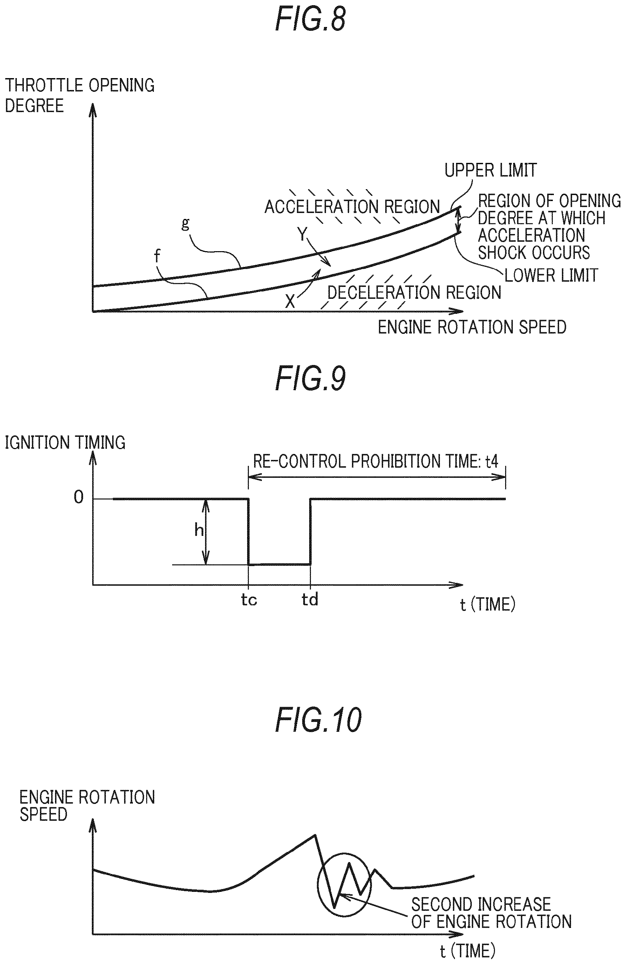

Fig. 8 is a chart showing a map of the threshold values of the throttle opening degree according to the engine rotation speed. As shown in Fig. 8, the predetermined throttle opening degree f and the predetermined throttle opening degree g gradually increase in accordance with an increase of the engine rotation speed. A region between a curve representing the predetermined throttle opening degree f and a curve representing the predetermined throttle opening degree g is a region of the throttle opening degree at which the acceleration shock occurs. Further, a region under the curve representing the predetermined throttle opening degree f is a deceleration region, and a region above the curve representing the predetermined throttle opening degree g is an acceleration region.

The arrow X shown in Fig. 8 represents an example where the throttle opening degree changes from a throttle opening degree less than the predetermined throttle opening degree f to become equal to or more than the predetermined throttle opening degree f and shifts to the region of the opening degree at which the acceleration shock occurs. On the other hand, the arrow Y represents an example where the throttle opening degree changes from a throttle opening degree larger than the predetermined throttle opening degree g to become equal to or less than the predetermined throttle opening degree g and shifts to the region of the opening degree at which the acceleration shock occurs.

Here, the acceleration shock has a characteristic of occurring when the throttle opening degree changes from the deceleration region to the acceleration region as represented by the arrow X. Therefore, at Step S12, with attention being focused on this characteristic, the case of the shift as represented by the arrow Y is excluded, and a process narrowing down target cases to the case of the shift represented by the arrow X is performed.

Next, at Step S13, the ECU 11 starts counting when the throttle opening degree becomes equal to or more than the predetermined throttle opening degree f at Step S12.

At Step S14, the ECU 11 determines whether or not an elapse time from the start of the counting at Step S13 is a predetermined time t3 or less. When the elapse time is equal to or less than the predetermined time t3, there is a possibility that the acceleration shock occurs, and therefore the ECU 11 goes to a process at Step S15, and when the elapse time is more than the predetermined time t3, it ends the process. In Fig. 7, the time t3 counted from the instant when the throttle opening degree becomes equal to or more than the throttle opening degree f is shown. Here, a reason why it is determined whether or not the predetermined time t3 has passed is that the acceleration shock usually occurs only within the predetermined time t3 after the throttle opening degree becomes equal to or more than the predetermined throttle opening degree f, and does not occur when more than the predetermined time t3 passes. Therefore, by the processes at Step S13 and Step S14, it is possible to narrow down the target cases only to the case where the acceleration shock occurs.

Next, at Step S15, the ECU 11 determined whether or not the throttle opening degree is not less than the predetermined throttle opening degree f nor more than the predetermined throttle opening degree g. When the throttle opening degree is within this predetermined range, the ECU 11 goes to a process at Step S16, and when the throttle opening degree is not within this predetermined range, it ends the process. As for the predetermined throttle opening degree f and the predetermined throttle opening degree g used for the determination, the aforesaid map, shown in Fig. 8, of the threshold values of the throttle opening degree according to the engine rotation speed is used. Such a process enables the narrowing down only to the case where the acceleration shock occurs.

Next, at Step S16, the ECU 11 determines whether or not a re-control prohibition time t4 has passed. Here, the re-control prohibition time is a time that the ECU 11 sets at later-described Step S18, and will be described in more detail at Step S18. When the re-control prohibition time t4 has passed, the ECU 11 goes to a process at Step S17, and when the re-control prohibition time t4 has not passed, it ends the process.

Next, at Step S17, the ECU 11 starts the reduction control. Concretely, the ECU 11 instructs the ignition coil 15 to supply the high-voltage current at a timing to which the ignition timing of the ignition plug 124 is delayed.

Fig. 9 is a chart showing a change of the ignition timing under the reduction control. In Fig. 9, the ignition timing less than 0 (zero) indicates the delay, and here, a distance from the ignition timing 0 (zero) is represented as a delay amount h. As shown in Fig. 9, the delay amount is 0 (zero) in a period up the time tc when the aforesaid determinations of Steps S10 to S16 are satisfied, and the delay amount h is set from the time tc.

Incidentally, the ECU 11 sets the delay amount corresponding to the engine rotation speed and the throttle opening degree, according to a map of the delay amount corresponding to the engine rotation speed and the throttle opening degree.

Such reduction control makes it possible to make an increase gradient of the engine rotation speed from the time ti small, as is shown by the engine rotation speed represented by the solid line in Fig. 4, compared with the engine rotation speed represented by the broken line when the reduction control is not performed. Therefore, it is possible to reduce the rotation difference value between the engine rotation speed and the rear wheel vehicle speed-engine rotation speed, enabling a reduction of the acceleration shock.

Next, at Step S18, the ECU 11 starts counting the re-control prohibition time t4. Concretely, as shown in Fig. 9, the ECU 11 counts the re-control prohibition time t4 from the instant when the reduction control is started at Step S17. The re-control prohibition time is a time during which the re-start of the reduction control is prohibited. That is, when the elapse time up to the aforesaid Step S16 is within the re-control prohibition time t4 set at Step S18 in the reduction control up to the previous one, the reduction control is not performed but the process is ended.

A reason why the re-control prohibition time t4 is thus set is to prevent a hunting behavior of the engine rotation speed that occurs due to too large a decrease of the engine rotation speed when the finish timing of the reduction control is delayed.

Fig. 10 is a chart showing the hunting behavior of the engine rotation speed. When the finish timing of the reduction control is delayed and the decrease of the engine rotation speed is too large, a second increase of the engine rotation speed occurs as shown in Fig. 10. At this time, if the re-control prohibition time is not set, the ECU 11 performs the reduction control in response to the second increase of the engine rotation speed. Therefore, the increase of the engine rotation speed and the reduction control are repeated, which appears as the hunting behavior.

Therefore, because the re-control prohibition time is set, it is possible to end the process by the determination at Step S16 without performing the reduction control, when the elapse time is within the re-control prohibition time, even if an attempt is made to perform the reduction control again in response to the increase of the engine rotation speed at and after the second time.

Next, at Step S19, the ECU 11 determines whether or not the calculated rotation difference value is less than a threshold value b (second deviation threshold value). When the rotation difference value is less than the threshold value b, the ECU 11 cancels the delay amount h of the ignition timing set at Step S17 and ends the reduction control. On the other hand, when the rotation difference value is equal to or more than the threshold value b, the ECU 11 goes to a process at Step S20.

As shown in Fig. 5, the rotation difference value rapidly decreases by the reduction control and becomes less than the threshold value b at a time tb. The ECU 11 cancels the set delay amount at the time tb when the rotation difference value becomes less than the threshold value b, and ends the reduction control. Note that the threshold value b is set smaller than the threshold value a. Therefore, it is possible to prevent a phenomenon that the rotation difference value reaches the threshold value b immediately after becoming equal to or more than the threshold value a from the aforesaid Step 10 and the reduction control cannot be sufficiently performed.

At Step S20, the ECU 11 determines whether or not the increase rate of the engine rotation speed is less than a threshold value d (second change rate threshold value). When the increase rate is less than the threshold value d, the ECU 11 cancels the delay amount h of the ignition timing set at Step S17, and ends the reduction control. On the other hand, when the increase rate is equal to or more than the threshold value d, the ECU 11 goes to a process at Step S21.

As shown in Fig. 6, the increase rate becomes a negative value immediately at a time td by the reduction control, and at this time, becomes less than the threshold value d. The ECU 11 cancels the set delay amount at the time td when the increase rate becomes less than the threshold value d, and ends the reduction control. Note that the threshold value d is set smaller than the threshold value c. Therefore, it is possible to prevent a phenomenon that the increase rate reaches the threshold value d immediately after becoming equal to or more than the threshold value c from the aforesaid Step S11 and the reduction control cannot be sufficiently performed.

At Step S21, the ECU 11 determines whether or not the throttle opening degree is less than the predetermined throttle opening degree f or is larger than the predetermined throttle opening degree g. When the throttle opening degree is within this range, the ECU 11 cancels the delay amount h of the ignition timing set at Step S17, and ends the reduction control. On the other hand, when the throttle opening degree is not within this range, the ECU 11 goes to a process at Step S22. As for the predetermined throttle opening degree f and the predetermined throttle opening degree g used for this determination, the aforesaid map, shown in Fig. 8, of the threshold values of the throttle opening degree according to the engine rotation speed is used.

At Step S22, the ECU 11 continues to set the delay amount h of the ignition timing and continues to perform the reduction control. Thereafter, until the reduction control is ended, the processes at Step S19 to Step S22 are repeated.

Generally, when the change of the engine rotation speed is reversed from an increase to a decrease (point e shown in Fig. 4), the increase rate of the engine rotation speed immediately becomes less than the aforesaid threshold value d (time td shown in Fig. 6). Therefore, the delay amount of the ignition timing returns to a normal one at the time td as shown in Fig. 9, and the reduction control is ended. Thus ending the reduction control at the timing when the engine rotation speed stops increasing makes it possible to prevent a decrease of the engine rotation speed from becoming too large and prevent the hunting behavior shown in Fig. 10.

As described above, according to this embodiment, the deviation information between the rotation information detected by the engine rotation sensor 12 and the rotation information detected by the rear wheel vehicle speed sensor 13 is used to determine the acceleration shock, which makes it possible to improve the determination accuracy, since the acceleration shock occurs due to the deviation between the rotation speeds of the engine 120 and the rear wheel 109.

Further, according to this embodiment, in addition to the deviation information, the change rate of the rotation information detected by the engine rotation sensor 12 and the throttle opening degree detected by the throttle opening degree sensor 14 are used to accurately determine the acceleration shock. Therefore, it is possible to perform the reduction control only when the acceleration shock actually occurs, which can prevent the reduction control from being performed unnecessarily.

Further, according to this embodiment, the reduction control is performed only within the predetermined time after the throttle opening degree detected by the throttle opening degree sensor 14 changes from a throttle opening degree less than the predetermined throttle opening degree to become equal to or more than the predetermined throttle opening degree. Since the acceleration shock occurs only in this predetermined time, it is possible to prevent the reduction control from being unnecessarily performed in a period not falling within this predetermined time.

Further, according to this embodiment, since the re-control prohibition time is set from the start of the reduction control, it is possible to prevent the reduction control from being performed in response to the increase of the engine rotation speed at or after the second time, which can prevent the hunting behavior of the engine rotation speed.

Further, according to this embodiment, the acceleration shock is reduced by delaying the ignition timing, which enables the easier control of a reduction amount of the engine output, compared with, for example, the ignition cut. Further, since the combustion in the engine 120 takes place even when the ignition timing is delayed, components of the exhaust gas are the same as those of the exhaust gas burned without the delay, and therefore, this embodiment is excellent also in view of protecting a catalyst.

In the forgoing, the present invention is described based on the above embodiment, but the present invention is not limited only to the above embodiment, and changes and so on can be made within the range of the present invention.

For example, in the above embodiment, the case where the present invention is applied to the motorcycle is described, but the present invention is applicable not only to this case but also to other vehicles in which the acceleration shock occurs at the time of the shift from the deceleration state to the acceleration state due to an allowance of power transmission members provided between an engine and a driving wheel.

Further, in the above embodiment, the case where the rotation difference value equal to the engine rotation speed from which the rear wheel vehicle speed-engine rotation speed is subtracted is taken as an example in the description, but this case is not restrictive. That is, it is only necessary that the deviation information between the engine rotation information and the driving wheel rotation information is used for the determination.

Further, in this embodiment, the case where the process of the flowchart shown in Fig. 11 is realized by the CPU of the ECU 11 executing the program is described, but this case is not restrictive, and the process of the flowchart shown in Fig. 11 may be executed by circuits structured as hardware.

It should be noted that the above embodiments merely illustrate concrete examples of implementing the present invention, and the technical scope of the present invention is not to be construed in a restrictive manner by these embodiments. That is, the present invention may be implemented in various forms without departing from the technical spirit or main features thereof.

According to the present invention, it is possible to accurately determine a case where an acceleration shock occurs and sufficiently reduce the acceleration shock.

**Claims**

1. An acceleration shock reduction control device which reduces an acceleration shock occurring when a vehicle (100) shifts from a deceleration state to an acceleration state, the acceleration shock reduction control device (10) comprising:

   means (12) for detecting a first rotation information of a crankshaft (131) of an engine (120) mounted on the vehicle (100);
   **characterized in that**, the acceleration shock reduction control device (10) comprising:

   means (13) for detecting a second rotation information of a driving wheel (109) which rotates by an output transmitted from the engine (120) through a plurality of power transmission members;
   means (11) for calculation a third rotation information which converts the second rotation information to the third rotation information of the crankshaft (131); and
   means (11) for performing control to reduce the acceleration shock by delaying an ignition timing of the engine (120) corresponding to the first rotation information of the crankshaft (131) and

   a throttle opening degree, when rotation difference value between the first rotation information of the crankshaft (131) and the third rotation information is equal or more than a first deviation threshold value.

2. The acceleration shock reduction control device according to claim 1, further comprising
   means (11) for calculating a change rate which calculates the change rate of the first rotation information of the crankshaft (131) based on the first rotation information,
   wherein the means (11) for performing control to reduce the acceleration shock performs the control to reduce the acceleration shock based on the change rate calculated by the means for calculating the change rate.

3. The acceleration shock reduction control device according to claim 2, wherein:

EP 2 639 434 B1

the means (11) for performing control to reduce the acceleration shock starts the control to reduce the acceleration shock when it is satisfied that the rotation difference value is equal to or more than a first deviation threshold value and the change rate of the first rotation information of the crankshaft (131) is equal to or more than a first change rate threshold value; and

the means (11) for performing control to reduce the acceleration shock ends the control to reduce the acceleration shock when rotation difference value becomes less than a second deviation threshold value or the change rate of the first rotation information of the crankshaft (131) becomes less than a second change rate threshold value, after the control to reduce the acceleration shock is started.

4. The acceleration shock reduction control device according to any one of claims 1 to 3, further comprising means (11) for detecting a throttle opening degree which detects the throttle opening degree of a throttle valve, wherein the means (11) for performing control to reduce the acceleration shock performs the control to reduce the acceleration shock based on the throttle opening degree detected by the means (11) for detecting the throttle opening degree.

5. The acceleration shock reduction control device according to claim 4, wherein the means (11) for performing control to reduce the acceleration shock performs the control to reduce the acceleration shock when the throttle opening degree detected by the means (11) for detecting the throttle opening degree is within a predetermined range set according to an engine rotation speed.

6. The acceleration shock reduction control device according to claim 4 or 5, wherein the means (11) for performing control to reduce the acceleration shock performs the control to reduce the acceleration shock when the throttle opening degree detected by the means (11) for detecting the throttle opening degree changes from a throttle opening degree less than a predetermined throttle opening degree to become equal to more than the predetermined throttle opening degree.

7. The acceleration shock reduction control device according to claim 6, wherein the means (11) for performing control to reduce the acceleration shock performs the control to reduce the acceleration shock only within a predetermined time after the throttle opening degree becomes equal to or more than the predetermined throttle opening degree.

8. The acceleration shock reduction control device according to any one of claims 1 to 7, wherein, in a predetermined time after the control to reduce the acceleration shock is started, the means (11) for performing control to reduce the acceleration shock prohibits the control to reduce the acceleration shock again after ending the control to reduce the acceleration shock.

9. An acceleration shock reduction control method which reduces an acceleration shock occurring when a vehicle (100) shifts from a deceleration state to an acceleration state, the method comprising:

an engine rotation information detecting step of detecting a first rotation information of a crankshaft (131) of an engine (120) mounted on the vehicle (100);
**characterized in that**, the method comprising:

a driving wheel rotation information detecting step of detecting a second rotation information of a driving wheel which rotates by an output transmitted from the engine through a plurality of power transmission members;
a rotation information calculating step of calculating a third rotation information by converting the second rotation information to the third rotation information of the crankshaft (131); and
a reduction controlling step of performing control to reduce the acceleration shock by delaying an ignition timing of the engine (120) corresponding to the first rotation information of the crankshaft (131) and a throttle opening degree, when rotation difference value between the first rotation information of the crankshaft (131) and the third rotation information is equal or more than a first deviation threshold value.

10. A program product for controlling an acceleration shock reduction control device according to any of the claims 1-8 which reduces an acceleration shock occurring when a vehicle (100) shifts from a deceleration state to an acceleration state, the program product causing a computer to execute:

an engine rotation information detecting step of detecting a first rotation information of a crankshaft (131) of an engine (120) mounted on the vehicle (100);

**characterized in that** the program product causing the computer to execute:

a driving wheel rotation information detecting step of detecting a second rotation information of a driving wheel (109) which rotates by an output transmitted from the engine (120) through a plurality of power transmission members;

a rotation information calculating step of calculating a third rotation information by converting the second rotation information to the third rotation information of the crankshaft (131); and

a reduction controlling step of performing control to reduce the acceleration shock by delaying an ignition timing of the engine (120) corresponding to the first rotation information of the crankshaft (131) and a throttle opening degree, when rotation difference value between the first rotation information of the crankshaft (131) and the third rotation information is equal or more than a first deviation threshold value.

**Patentansprüche**

1. Beschleunigungsstoßverminderungssteuervorrichtung, die einen Beschleunigungsstoß reduziert, der auftritt, wenn ein Fahrzeug (100) von einem Verzögerungszustand in einen Beschleunigungszustand übergeht, wobei die Beschleunigungsstoßverminderungssteuervorrichtung (10) umfasst:

ein Mittel (12) zum Erfassen einer ersten Rotationsinformation einer Kurbelwelle (131) eines an dem Fahrzeug (100) montierten Motors (120),

**dadurch gekennzeichnet, dass** die Beschleunigungsstoßverminderungssteuervorrichtung (10) umfasst:

ein Mittel (13) zum Erfassen einer zweiten Rotationsinformation eines Antriebsrades (109), das durch eine von dem Motor (120) über eine Mehrzahl von Kraftübertragungselementen übertragene Leistung rotiert,

ein Mittel (11) zur Berechnung einer dritten Rotationsinformation, die die zweite Rotationsinformation in die dritte Rotationsinformation der Kurbelwelle (131) umwandelt, und

ein Mittel (11) zum Durchführen einer Steuerung zur Verminderung des Beschleunigungsstoßes durch Verzögern eines Zündzeitpunkts des Motors (120) entsprechend der ersten Rotationsinformation der Kurbelwelle (131) und eines Drosselklappenöffnungsgrades, wenn ein Rotationsdifferenzwert zwischen der ersten Rotationsinformation der Kurbelwelle (131) und der dritten Rotationsinformation gleich oder größer als ein erster Abweichungsschwellenwert ist.

2. Beschleunigungsstoßverminderungssteuervorrichtung nach Anspruch 1, ferner umfassend
ein Mittel (11) zum Berechnen einer Änderungsrate, das die Änderungsrate der ersten Rotationsinformation der Kurbelwelle (131) basierend auf der ersten Rotationsinformation berechnet,
wobei das Mittel (11) zum Durchführen einer Steuerung zur Verminderung des Beschleunigungsstoßes die Steuerung zur Verminderung des Beschleunigungsstoßes basierend auf der durch das Mittel zum Berechnen der Änderungsrate berechneten Änderungsrate durchführt.

3. Beschleunigungsstoßverminderungssteuervorrichtung nach Anspruch 2, wobei,
das Mittel (11) zum Durchführen einer Steuerung zur Verminderung des Beschleunigungsstoßes die Steuerung startet, um den Beschleunigungsstoß zu reduzieren, wenn der Rotationsdifferenzwert gleich oder größer als ein erster Abweichungsschwellenwert und die Änderungsrate der ersten Rotationsinformation der Kurbelwelle (131) gleich oder größer als ein erster Änderungsratenschwellenwert ist, und
das Mittel (11) zum Durchführen einer Steuerung zur Verminderung des Beschleunigungsstoßes die Steuerung beendet, um den Beschleunigungsstoßes zu reduzieren, wenn der Rotationsdifferenzwert kleiner als ein zweiter Abweichungsschwellenwert wird oder die Änderungsrate der ersten Rotationsinformation der Kurbelwelle (131) geringer wird als ein zweiter Änderungsratenschwellenwert, nachdem die Steuerung zur Verminderung des Beschleunigungsstoßes gestartet wurde.

4. Beschleunigungsstoßverminderungssteuervorrichtung nach einem der Ansprüche 1 bis 3, ferner umfassend ein Mittel (11) zum Erfassen eines Drosselklappenöffnungsgrades, das den Drosselklappenöffnungsgrad eines Drosselventils erfasst,
wobei das Mittel (11) zum Durchführen einer Steuerung zur Verminderung des Beschleunigungsstoßes die Steuerung durchführt, um den Beschleunigungsstoßes auf Basis des durch das Mittel (11) zum Erfassen des Drosselklappenöffnungsgrades erfassten Drosselöffnungsgrades zu reduzieren.

**5.** Beschleunigungsstoßverminderungssteuervorrichtung nach Anspruch 4, wobei
das Mittel (11) zum Durchführen der Steuerung zur Verminderung des Beschleunigungsstoßes eine Steuerung durchführt, um den Beschleunigungsstoß zu reduzieren, wenn der durch das Mittel (11) zum Erfassen des Drosselklappenöffnungsgrades erfasste Drosselklappenöffnungsgrad innerhalb eines vorbestimmten Bereichs liegt, der gemäß einer Motordrehzahl eingestellt ist.

**6.** Beschleunigungsstoßverminderungssteuervorrichtung nach Anspruch 4 oder 5, wobei
das Mittel (11) zum Durchführen einer Steuerung zur Verminderung des Beschleunigungsstoßes die Steuerung durchführt, um den Beschleunigungsstoß zu reduzieren, wenn der durch das Mittel (11) zum Erfassen des Drosselklappenöffnungsgrades erfasste Drosselklappenöffnungsgrad von einem Drosselklappenöffnungsgrad, der kleiner als ein vorbestimmter Drosselklappenöffnungsgrad ist sich ändert um gleich oder größer als der vorgegebene Drosselklappenöffnungsgrad zu werden.

**7.** Beschleunigungsstoßverminderungssteuervorrichtung nach Anspruch 6, wobei das Mittel (11) zum Durchführen einer Steuerung zur Verminderung des Beschleunigungsstoßes die Steuerung zur Verminderung eines Beschleunigungsstoßes nur innerhalb einer vorbestimmten Zeit ausführt, nachdem der Drosselklappenöffnungsgrad gleich oder größer als der vorbestimmte Drosselöffnungsgrad ist.

**8.** Beschleunigungsstoßverminderungssteuervorrichtung nach einem der Ansprüche 1 bis 7, wobei eine vorbestimmten Zeit, nachdem die Steuerung zur Verminderung des Beschleunigungsstoßes begonnen hat, das Mittel (11) zum Durchführen einer Steuerung zur Verminderung des Beschleunigungsstoßes verhindert, dass die Steuerung zur Verminderung des Beschleunigungsstoßes nachdem die Steuerung beendet worden ist, den Beschleunigungsstoß erneut reduziert.

**9.** Beschleunigungsstoßverminderungssteuerverfahren, das einen Beschleunigungsstoß reduziert, der auftritt, wenn ein Fahrzeug (100) von einem Verzögerungszustand in einen Beschleunigungszustand übergeht, wobei das Verfahren
einen Motorrotationsinformationserfassungsschritt zum Erfassen einer ersten Rotationsinformation einer Kurbelwelle (131) eines Motors (120), der an dem Fahrzeug (100) montiert ist, umfasst, **dadurch gekennzeichnet, dass** das Verfahren
einen Antriebsradrotationsinformationserfassungsschritt zum Erfassen einer zweiten Rotationsinformation eines Antriebsrads, das durch eine von dem Motor durch eine Mehrzahl von Kraftübertragungselementen übertragene Leistung rotiert,
einen Rotationsinformationsberechnungsschritt zum Berechnen einer dritten Rotationsinformation durch Umwandeln der zweiten Rotationsinformation in die dritte Rotationsinformation der Kurbelwelle (131), und
einen Verminderungssteuerungsschritt zum Durchführen einer Steuerung zum Reduzieren des Beschleunigungsstoßes durch Verzögern eines Zündzeitpunkts des Motors (120) entsprechend der ersten Rotationsinformation der Kurbelwelle (131) und eines Drosselklappenöffnungsgrades, wenn der Rotationsdifferenzwert zwischen der ersten Rotationsinformation der Kurbelwelle (131) und der dritten Rotationsinformation gleich oder größer als ein erster Abweichungsschwellenwert ist, umfasst.

**10.** Programmprodukt zur Steuerung einer Beschleunigungsstoßverminderungssteuervorrichtung nach einem der Ansprüche 1 bis 8, das einen Beschleunigungsstoß reduziert, der auftritt, wenn ein Fahrzeug (100) von einem Verzögerungszustand in einen Beschleunigungszustand übergeht, wobei das Programmprodukt, bewirkt, dass ein Computer
einen Motorrotationsinformationserfassungsschritt zum Erfassen einer ersten Rotationsinformation einer Kurbelwelle (131) eines Motors (120), der an dem Fahrzeug (100) montiert ist, ausführt **dadurch gekennzeichnet, dass** das Programmprodukt, bewirkt, dass der Computer
einen Antriebsradrotationsinformationserfassungsschritt zum Erfassen einer zweiten Rotationsinformation eines Antriebsrads (109), das durch eine von dem Motor (120) durch eine Mehrzahl von Kraftübertragungselementen übertragene Leistung rotiert,
einen Rotationsinformationsberechnungsschritt zum Berechnen einer dritten Rotationsinformation durch Umwandeln der zweiten Rotationsinformation in die dritte Drehrichtungsinformation der Kurbelwelle (131), und
einen Verminderungssteuerungsschritt zum Durchführen einer Steuerung zum Reduzieren des Beschleunigungsstoßes durch Verzögern eines Zündzeitpunkts des Motors (120) entsprechend der ersten Rotationsinformation der Kurbelwelle (131) und eines Drosselklappenöffnungsgrades, wenn der Rotationsdifferenzwert zwischen der ersten Rotationsinformation der Kurbelwelle (131) und der dritten Rotationsinformation gleich oder größer als ein erster Abweichungsschwellenwert ist, ausführt.

**Revendications**

1. Dispositif de commande de réduction de choc d'accélération qui réduit un choc d'accélération survenant lorsqu'un véhicule (100) passe d'un état de décélération à un état d'accélération, le dispositif de commande de réduction de choc d'accélération (10) comprenant :

   un moyen (12) pour la détection d'une première information de rotation d'un vilebrequin (131) d'un moteur (120) monté sur le véhicule (100) ;
   **caractérisé en ce que** le dispositif de commande de réduction de choc d'accélération (10) comprend :

   un moyen (13) pour la détection d'une deuxième information de rotation d'une roue motrice (109) qui tourne par une sortie transmise à partir du moteur (120) par l'intermédiaire d'une pluralité d'éléments de transmission de puissance ;
   un moyen (11) pour le calcul d'une troisième information de rotation qui convertit la deuxième information de rotation en la troisième information de rotation du vilebrequin (131) ; et
   un moyen (11) pour la réalisation d'une commande pour la réduction du choc d'accélération en retardant un temps d'allumage du moteur (120) en fonction de la première information de rotation du vilebrequin (131) et un degré d'ouverture des gaz, lorsque la valeur de différence de rotation entre la première information de rotation du vilebrequin (131) et la troisième information de rotation est supérieure ou égale à une première valeur seuil d'écart.

2. Dispositif de commande de réduction de choc d'accélération selon la revendication 1, comprenant en outre :

   un moyen (11) pour le calcul d'un taux de variation qui calcule le taux de variation de la première information de rotation du vilebrequin (131) sur la base de la première information de rotation,
   le moyen (11) pour la réalisation de la commande pour la réduction du choc d'accélération réalisant la commande pour la réduction du choc d'accélération sur la base du taux de variation calculé par le moyen pour le calcul du taux de variation.

3. Dispositif de commande de réduction de choc d'accélération selon la revendication 2, dans lequel :

   le moyen (11) pour la réalisation de la commande pour la réduction du choc d'accélération démarre la commande pour la réduction du choc d'accélération lorsque la valeur de différence de rotation est supérieure ou égale à une première valeur seuil d'écart et le taux de variation de la première information de rotation du vilebrequin (131) est supérieur ou égal à une première valeur seuil de taux de variation ; et
   le moyen (11) pour la réalisation de la commande pour la réduction du choc d'accélération termine la commande pour la réduction du choc d'accélération lorsque la valeur de différence de rotation devient inférieure à une deuxième valeur seuil d'écart ou le taux de variation de la première information de rotation du vilebrequin (131) devient inférieur à une deuxième valeur seuil de taux de variation, après que la commande pour la réduction du choc d'accélération ait été démarrée.

4. Dispositif de commande de réduction de choc d'accélération selon l'une des revendications 1 à 3, comprenant en outre :

   un moyen (11) pour la détection d'un degré d'ouverture des gaz qui détecte le degré d'ouverture des gaz d'une vanne de gaz,
   le moyen (11) pour la réalisation de la commande pour la réduction du choc d'accélération réalisant la commande pour la réduction du choc d'accélération sur la base du degré d'ouverture des gaz détecté par le moyen (11) pour la détection du degré d'ouverture des gaz.

5. Dispositif de commande de réduction de choc d'accélération selon la revendication 4, dans lequel le moyen (11) pour la réalisation de la commande pour la réduction du choc d'accélération réalise la commande pour la réduction du choc d'accélération lorsque le degré d'ouverture des gaz détecté par le moyen (11) pour la détection du degré d'ouverture des gaz est dans un intervalle prédéterminé en fonction d'une vitesse de rotation du moteur.

6. Dispositif de commande de réduction de choc d'accélération selon la revendication 4 ou 5, dans lequel le moyen (11) pour la réalisation de la commande pour la réduction du choc d'accélération réalise la commande pour la réduction du choc d'accélération lorsque le degré d'ouverture des gaz détecté par le moyen (11) pour la détection du degré d'ouverture des gaz varie à partir d'un degré d'ouverture des gaz inférieur à un degré d'ouverture des gaz prédéterminé pour devenir supérieur ou égal au degré d'ouverture des gaz prédéterminé.

7. Dispositif de commande de réduction de choc d'accélération selon la revendication 6, dans lequel le moyen (11) pour la réalisation de la commande pour la réduction du choc d'accélération réalise la commande pour la réduction du choc d'accélération uniquement dans laps de temps prédéterminé après que le degré d'ouverture des gaz soit devenu supérieur ou égal au degré d'ouverture des gaz prédéterminé.

8. Dispositif de commande de réduction de choc d'accélération selon l'une des revendications 1 à 7, dans lequel, dans un laps de temps prédéterminé après que la commande pour la réduction du choc d'accélération ait été démarré, le moyen (11) pour la réalisation de la commande pour la réduction du choc d'accélération empêche la commande pour la réduction du choc d'accélération de réduire le choc d'accélération à nouveau après la fin de la commande de réduction du choc d'accélération.

9. Procédé de commande de réduction de choc d'accélération qui réduit un choc d'accélération survenant lorsqu'un véhicule (100) passe d'un état de décélération à un état d'accélération, ce procédé comprenant :

une étape de détection d'une information de rotation de moteur pour la détection d'une première information de rotation d'un vilebrequin (131) d'un moteur (120) monté sur le véhicule (100) ;
**caractérisé en ce que** le procédé comprend :

une étape de détection d'une information de rotation d'une roue motrice pour la détection d'une deuxième information de rotation d'une roue motrice qui tourne par une sortie transmise à partir du moteur par l'intermédiaire d'une pluralité d'éléments de transmission de puissance ;
une étape de calcul d'information de rotation pour le calcul d'une troisième information de rotation en convertissant la deuxième information de rotation en la troisième information de rotation du vilebrequin (131) ; et
une étape de contrôle de réduction pour la réalisation d'une commande pour la réduction du choc d'accélération en retardant un temps d'allumage du moteur (120) en fonction de la première information de rotation du vilebrequin (131) et d'un degré d'ouverture des gaz, lorsque la valeur de différence de rotation entre la première information de rotation du vilebrequin (131) et la troisième information de rotation est supérieure ou égale à une première valeur seuil d'écart.

10. Produit logiciel pour le contrôle d'un dispositif de commande de réduction de choc d'accélération selon l'une des revendications 1 à 8, qui réduit un choc d'accélération survenant lorsqu'un véhicule (100) passe d'un état de décélération à un état d'accélération, le produit logiciel faisant en sorte que l'ordinateur exécute :

une étape de détection d'une information de rotation de moteur pour la détection d'une première information de rotation d'un vilebrequin (131) d'un moteur (120) monté sur le véhicule (100) ;
**caractérisé en ce que** le produit logiciel fait en sorte que l'ordinateur exécute :

une étape de détection d'information de rotation de roue motrice pour la détection d'une deuxième information de rotation d'une roue motrice (109) qui tourne par une sortie transmise à partir du moteur (120) par l'intermédiaire d'une pluralité d'éléments de transmission de puissance ;
une étape de calcul d'information de rotation pour le calcul d'une troisième information de rotation en convertissant la deuxième information de rotation en la troisième information de rotation du vilebrequin (131) ; et
une étape de contrôle de réduction pour la réalisation d'une commande pour la réduction du choc d'accélération en retardant un temps d'allumage du moteur (120) en fonction de la première information de rotation du vilebrequin (131) et d'un degré d'ouverture des gaz, lorsque la valeur de différence de rotation entre la première information de rotation du vilebrequin (131) et la troisième information de rotation est supérieure ou égale à une première valeur seuil d'écart.

FIG.1

## FIG.2

*FIG.3*

12 ── ENGINE ROTATION SENSOR

13 ── REAR WHEEL VEHICLE SPEED SENSOR

14 ── THROTTLE OPENING DEGREE SENSOR

ECU ── 11

10

IGNITION COIL ── 15

*FIG.4*

ENGINE ROTATION SPEED

e

i

0

t1  ti     te t2        t (TIME)

## FIG.5

ROTATION DIFFERENCE
VALUE

## FIG.6

INCREASE RATE OF ENGINE
ROTATION SPEED

## FIG.7

THROTTLE OPENING
DEGREE

## FIG.8

THROTTLE OPENING
DEGREE

UPPER LIMIT

ACCELERATION REGION

REGION OF OPENING
DEGREE AT WHICH
ACCELERATION
SHOCK OCCURS

g

Y

f

LOWER LIMIT

X

DECELERATION REGION

ENGINE ROTATION SPEED

## FIG.9

IGNITION TIMING

RE-CONTROL PROHIBITION TIME: t4

0

h

tc      td

t (TIME)

## FIG.10

ENGINE ROTATION
SPEED

SECOND INCREASE
OF ENGINE ROTATION

t (TIME)

19

*FIG.11*

```
                    ( START )                S10
                        │
        ┌───────────────▼───────────────┐  NO
        ◇  ROTATION DIFFERENCE VALUE     ◇──────┐
        ◇         ≧ a?                   ◇       │
        └───────────────┬───────────────┘       │
                     YES │           S11         │
        ┌───────────────▼───────────────┐  NO   │
        ◇   INCREASE RATE OF            ◇───────┤
        ◇   ENGINE ROTATION SPEED       ◇        │
        ◇         ≧ c?                  ◇        │
        └───────────────┬───────────────┘        │
                     YES │        S12             │
        ┌───────────────▼───────────────┐  NO    │
        ◇  THROTTLE OPENING DEGREE      ◇────────┤
        ◇  < f CHANGES TO THROTTLE      ◇         │
        ◇   OPENING DEGREE ≧ f?         ◇         │
        └───────────────┬───────────────┘         │
                     YES │                         │
   S13 ┌─────────────────▼─────────────────┐       │
       │        START COUNTING             │       │
       └─────────────────┬─────────────────┘       │
                         │            S14           │
        ┌────────────────▼──────────────┐  NO      │
        ◇    ELAPSE TIME ≦ t3?          ◇──────────┤
        └────────────────┬──────────────┘           │
                     YES │         S15               │
        ┌────────────────▼──────────────┐  NO        │
        ◇  f ≦ THROTTLE OPENING         ◇────────────┤
        ◇     DEGREE ≦ g?               ◇            │
        └────────────────┬──────────────┘            │
                     YES │      S16                   │
        ┌────────────────▼──────────────┐  NO         │
        ◇   RE-CONTROL                  ◇─────────────┤
        ◇   PROHIBITION TIME: t4        ◇             │
        ◇   HAS PASSED?                 ◇             │
        └────────────────┬──────────────┘             │
                     YES │                             │
   S17 ┌─────────────────▼──────────────────┐          │
       │ DELAY IGNITION: SET DELAY AMOUNT h  │          │
       └─────────────────┬──────────────────┘          │
   S18 ┌─────────────────▼──────────────────┐          │
       │ COUNT RE-CONTROL PROHIBITION TIME t4│          │
       └─────────────────┬──────────────────┘          │
                         │           S19                │
        ┌────────────────▼──────────────┐  YES          │
  ┌────▶◇   ROTATION DIFFERENCE         ◇───────────────┤
  │     ◇      VALUE < b?               ◇               │
  │     └────────────────┬──────────────┘               │
  │  S22             NO │        S20                     │
  │ ┌─────────────┐ ┌───▼───────────────┐  YES           │
  │ │    DELAY    │ ◇  INCREASE RATE     ◇────────────────┤
  │ │   IGNITION  │ ◇  OF ENGINE ROTATION◇                │
  │ └─────▲───────┘ ◇  SPEED < d?        ◇                │
  │       │         └───┬───────────────┘                │
  │       │         NO │       S21                        │
  │       │  NO  ┌──────▼──────────────┐  YES              │
  │       └──────◇   THROTTLE           ◇───────────────────┤
  │              ◇ OPENING DEGREE < f OR ◇                  │
  │              ◇ THROTTLE             ◇                   │
  │              ◇ OPENING DEGREE > g?  ◇                   │
  │              └──────┬───────────────┘                   │
  │                     │                                   │
  │                     ▼                                   ▼
  │                 ( END )◀───────────────────────────────┘
```

**EP 2 639 434 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011289592 A

- EP 0690225 A